# EUROPEAN PATENT APPLICATION

(11) **EP 1 860 585 A1**
(43) Date of publication of application: **28.11.2007**
(21) Application number: 06010263.9
(22) Date of filing: 18.05.2006
(51) Int. Cl.: G06F 21/00

(54) **Method, rendering device and mobile device for preventing unauthorized use of digital content**

(71) Applicant: Vodafone Holding GmbH, 40027 Düsseldorf (DE)
(72) Inventor: Koraichi, Najib, 6333 CT Schimmert (NL); Montaner, Javier, 6211 GD Maastricht (NL)
(74) Representative: Müller, Thomas

(57) **Abstract**

The present invention relates to a method for preventing unauthorized use of digital content. The method is characterized in that a rendering device (2, 4) receives protected digital content and initiates a connection for communication to at least one mobile device (5) in the proximity of the rendering device (2, 4) for requesting information from the mobile device (5). The invention further relates to a rendering device (2, 4) and a mobile device (5) for the rendering of digital content.

## Description

The present invention relates to a method, a rendering device and a mobile device for preventing unauthorized use of digital content.

The use of digital content in particular content on physical media storage means can partially be limited to authorized users or areas by the distribution channels used for such storage means. ln contrast, the limitation of digital content provided through the Internet or other similar channels is difficult to protect.

A known attempt to protect the rights of the copyright owners to the content is the so called Digital Rights Management (DRM). The known DRM-solutions mainly relate to the device for rendering the content. As such the rendering device might be programmed to only decrypt content from a specific source.

One of the known DRM solutions is the so called Content Scrambeling System (CSS). This system for example in combination with Region Coding, allows the limitation of the use of content to a predefined area. However, the known DRM solutions restrict the fair use of content, which in particular is the creation of compilations or full quality reproductions for the use as safe copies, in the car or for children. Furthermore some rendering devices, such as computers, which would in general be capable of displaying content, would not be able to render content protected by CSS.

The disadvantage of the known protection solutions is hence that even for an authorized user the content may not be accessible.

Also with a DRM solution as suggested in US 2005/0234735 A1 using proximity testing, these drawbacks cannot be overcome. ln the system suggested in this prior art document, the distance of a device requesting the content and a source delivering the content is observed. The distance is being determined by measuring the elapsed time between the time of transmission of verification data and the time of receipt of the reply message. Hence, the location of the requesting device, i.e. the rendering device, in relation to the source can be monitored and used as the basis for allowing the rendering of the content. The right to use the content for the actual user can, however, not be monitored with the system according to the prior art document.

The problem to be solved by the present invention is hence to provide a solution, wherein both the right of the copyright owner and the right of the authorized user are observed in a reliable fashion.

The present invention is based on the finding that this problem can be solved by providing a system wherein the user's position is being considered when determining, whether the use of the content is to be allowed.

According to a first aspect of the invention a method for preventing unauthorized use of digital content is provided, wherein a rendering device receives protected digital content and initiates a connection for communication to at least one mobile device in the proximity of the rendering device for requesting information from the mobile device.

The rendering device can be any device for displaying, presenting, playing-back or otherwise making the digital content available to a user. The rendering device can for example be a DVD-player, a CD-player, a computer or suchlike devices. The digital content may comprise pictures, movies, music and/or programs.

The content can be received at the rendering device by providing a physical media such as a DVD or over a connection to a content source. The protected content may also for example be downloaded from a remote server on the Internet. The protection of the content can be realized in different ways. The content may for example be encrypted with an encryption key which makes rendering without the decryption key impossible at any time and/or the content may be bound to a license which allows rendering at preset time conditions or state conditions. Licenses with time conditions may for example allow rendering only until a preset date is reached, whereas licenses with state conditions may for example allow rendering only for a preset amount of times.

The connection which is initialized or established by the rendering device may be a wireless connection, wherein the standard for information transfer over the connection may be for example a NFC, Bluetooth, WLAN, Zigbee. The connection may be established over any short range radio channel which the rendering device can use to contact the mobile device, in particular a SIM card inside a mobile phone. Also Infrared connections may be used. The mobile device to be contacted by the rendering device may be known to the rendering device by an initial registration step, wherein the rendering device generates a request to the user to swipe his mobile device so that the rendering device can establish a more permanent connection with the mobile device, in particular a hardware token such as a SIM card of a mobile phone. Also a connection between the rendering device and the mobile device via cable is covered by the present invention.

The mobile device, with which the rendering device tries to establish connection, can be any mobile device, which is capable of communicating with the rendering device. ln particular the mobile device will preferably be a mobile phone, a PDA, a laptop or suchlike devices.

By obtaining information, which is necessary for the rendering of the protected content, from a device separate from the rendering device, the level of security against misuse and fraud can be increased. The usage of a separate mobile device also provides the possibility to use information in the protection of the digital content which would not be available at the rendering device, but which can be obtained by the mobile device. Since the connection is in addition established to a mobile device in the proximity of the rendering device, additional security features can be realized. In particular the rendering of the content can only be carried out if a mobile device associated to an authorized user is close to the rendering device.

Any request for information from the rendering device to the mobile device may include an identification of the content to be rendered. This is particularly preferable, if license information is requested from the rendering device. ln cases where only license parameter values are requested the identification of the content may not be included in the request.

The license, by which the usage of digital content is governed, according to the present invention preferably comprises a key for decrypting encrypted content and a license policy for using the key and or the content.

ln one embodiment the rendering device requests license information from the mobile device. Such license information may be license policies of a license, and/or a key for decrypting the protected content. ln addition or alternatively license parameter values can be requested from the mobile device. The term license parameter values is hereinafter used for values or data that can be compared to preset parameters in license policies in order to verify the compliance with a license policy.

Since the rendering device will request license information according to one embodiment of the method, in that case no license information has to be available at the rendering device, when the protected content is received. The rendering device will merely determine that rendering is not possible and will produce a request for respective license information to a mobile device close by. The processing power of the rendering device can thus be lower as the verification of a license and license policies may be performed remotely on the mobile device and only a decryption key will be transmitted to the rendering device for decryption.

In case license parameter values are requested from the mobile device, the license is already on the rendering device- obtained from the mobile device or in a different way. In that case the verification may be performed on the rendering device and thus the reaction time in accordance with the results of the verification can be minimized.

The rendering device may request position information of the mobile device from the mobile device. This request will be done implicitly. If a rendering device is not able to establish a communication connection to a predetermined mobile device, the rendering device obtains the information that the mobile device is not within the proximity of the rendering device. The range of proximity is determined by the sort of communication connection used. With the information that a mobile device is not within the proximity of the rendering device license policies, which require the presence of a user, can be enforced.

Further information that may be requested by the rendering device may be location information of the mobile device. Location information in particular relates to geographical location information. This information can be obtained by identifying the cell that a mobile device is registered in, in a cellular network, or by using a positioning system, such as GPS. With this information also license policies that only allow the usage in a specific territory, e.g. country, can be verified and enforced.

Finally authentication information of the user can be requested by the rendering device from the mobile device. This feature allows for additional protection against misuse. The authentication may be done by the use of a token, in particular a hardware token such as a SIM card of a mobile phone. In addition or alternatively the authentication can comprise biometric authentication, wherein for example the fingerprint of the user is checked at the mobile device. Finally also manually entered identification such as a PIN (personal identification number) or a password can be used. The user will be prompted by the mobile device to enter such identification information. The additional usage of authentication information provides for increased security. With the rendering device possibly checking the availability of a mobile device, its location and the identity of the user fraud can be avoided.

According to the present invention it is possible that the rendering device will establish a connection to a mobile device, if the attempt to render content fails. This failure may be due to encryption. In that case the rendering device may not have any information on license policies at the time of the attempted rendering. The rendering device will request this information or the decryption key from the mobile device. It is, however, also possible that the rendering device has license information available. The license associated to the content to be rendered may prescribe that rendering shall only be allowed if a mobile device of the authorized user for the content is close by. In that case the rendering device will initiates the connection to the mobile device in accordance with license information received at the rendering device.

According to one embodiment the rendering device may compare received license information and/or license parameter values to data available on the rendering device. The license information and/or license parameter may be received from the mobile device in response to one of the above mentioned requests. The data available on the rendering device may be a license that was received together with the content, e.g. on a DVD, or that was previously received from the mobile device. lf license parameter values are received, e.g. the country in which the mobile device is presently located, the rendering device may compare this value against preset license parameters, e.g. the content is only to be rendered in Germany and the UK. This comparison can also be referred to as the verification of the license and the license policy.

As part of the license the protected content may be encrypted. The rendering device may receive the decryption key from the mobile device and decrypt the content for rendering. ln that case the verification of the license will be carried out on the mobile device. The mobile device will compare actual values against license information and policies and upon verification of the license will transfer the key to the rendering device.

The initiation of a connection to the mobile device and requesting of information from the mobile device is preferably performed before the rendering of the content. It is, however, also possible to also perform these steps during the rendering of the content. In particular the requesting of information from the mobile device can be carried out during the rendering of the content. This enables the rendering device and/or the mobile device to monitor the conditions during the rendering and thereby increases the level of security, as the license requirements have to be maintained during the rendering.

According to one embodiment of the invention the mobile device receives a request for license parameter values, in particular position information, from the rendering device, obtains the license parameter values, in particular position information, and transfers the obtained values to the rendering device. The license parameter value may be obtained from a positioning system such as GPS. In the described case, the rendering device performs the verification of the license, which includes policies relating to the position of the mobile device.

It is also possible that the mobile device receives a request for license information from the rendering device, compares license information stored on the mobile device with the request and transfers the license information to the rendering device. ln this case the mobile device receives the license from a license source and may store it on the mobile device. Upon receipt of the request, the mobile device will screen the stored information to identify if a license for the content to be rendered is available and will transfer the respective information to the rendering device. It may be provided that the mobile device transfers the license as a whole to the rendering device. In that case further rendering of the content on other rendering devices will not be possible, as the license would be removed from the mobile device. It is, however, also possible to for the mobile device to only transfer the decryption key to the rendering device. In that case further rendering actions may be performed simultaneously.

According to a further aspect of the invention, a rendering device for rendering digital content is provided, which is characterized in that the rendering device comprises a communication unit for establishing bi-directional communication connection to a mobile device. Whereas some known rendering devices are provided with a communication unit for receiving content, e.g. via a cable plugged into the rendering device, these rendering devices do in general not allow for a bi-directional communication. The content in the prior art is being pushed onto the rendering device. With the inventive rendering device and the bi-directional communication connection to a mobile device, information can be requested from the mobile device. In particular information which is necessary to render protected digital content can be requested from and received at the rendering device.

According to one embodiment the rendering device comprises a security unit for processing license information. The provision of such a security unit enables the rendering device for example to identify any information that is necessary for the rendering of the content. ln particular the security unit may identify values that are necessary for the verification of license policies. The thus identified values may be requested from the mobile device.

Furthermore the rendering device may comprise a comparison unit for comparing license parameter values with license parameters. The license parameter values may be received from the mobile device. By providing such a comparison unit, the rendering device will be able to verify license policies that require license parameters to be within specific value ranges. These value ranges may for example be country lists.

In addition or alternatively the rendering device may comprise a decryption unit for decrypting protected content. The decryption will preferably be carried out with a decryption key received from the mobile device or made usable by verification of license requirements on the rendering device.

According to another aspect of the invention a mobile device for use in combination with a rendering device for rendering protected digital content is provided. The mobile device is characterized in that it comprises a processing unit for processing requests from the rendering device.

By providing a processing unit, the mobile device can interact with the rendering device rather than merely push content to the rendering device. The processing of the request from the rendering device in the processing unit may comprise the identification of values or information to be obtained and initializing respective actions. For example a display prompting the user to enter a PIN or to provide a finger print may be generated. Also information relating to the geographical location can be obtained by the processing unit. This can be realized by reading values from storage in the mobile phone or by obtaining these values using a positioning system.

Preferably the mobile device comprises a storage unit for storing license information relating to digital content. By providing such a storage unit, the mobile device can serve for several rendering devices to verify and/or provide a license for the respective content.

In a preferred embodiment the mobile device comprises a token for authentication of a user of digital content. This token can for example be a SIM card. As such a token is associated with one specific user, the SIM card can serve as an authentication for the use of digital content for that specific user.

The mobile device may further comprise a comparator unit for comparing parameter values with license parameters. By providing a comparator unit, the mobile device will be able to verify the compliance with license policies. In that case the mobile device will only transfer the verification result to the rendering device. If the license could be verified, the mobile device may transfer for example a decryption key to the rendering device for decryption of the content.

The described units of the rendering device and the mobile device may be realised in physical units or as programs.

Advantages and features described with respect to the inventive method also apply to the inventive mobile device and the inventive rendering device, where applicable, and vice versa.

With the present invention it is possible to include new usage rules in licenses protecting digital content. In particular the user presence may be enforced, wherein this enforcement may be based on physical tokens or other identification means such as a PIN and biometrics. In addition to the user presence the user's location may be used as a content usage rule within the policy of a license.

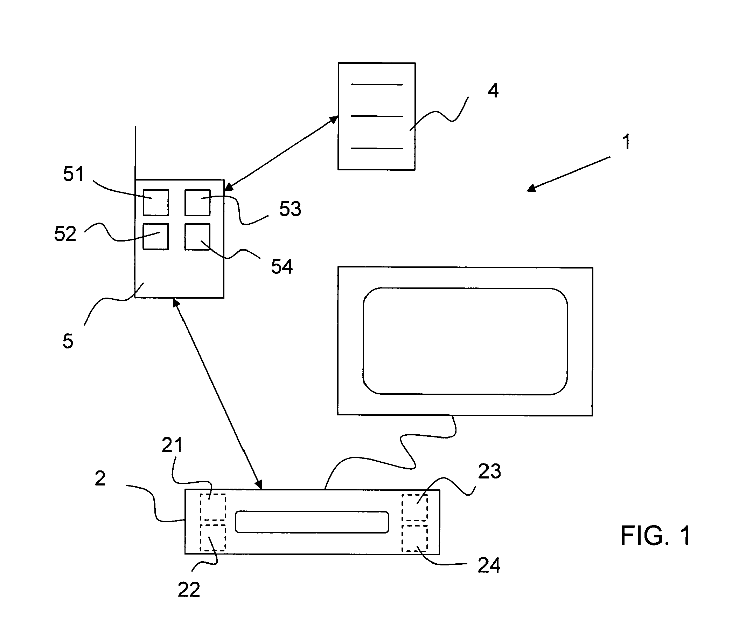

The present invention will now be described again, with reference to the enclosed Figure 1, which shows a system with an embodiment of the inventive rendering device and the inventive mobile device.

In Figure 1 a setup for the inventive method is shown. ln this setup or system 1 a rendering device, in this case a DVD-player 2, is connected to a TV 3. Also another rendering device in the form of a stereo system 4 is shown. The DVD player 2 and the stereo system 4 as rendering devices may at least temporarily have a communication connection to a mobile device, which is depicted in Figure 1 as a mobile phone 5. The communication connection to the mobile phone 5 may for example be a connection via Infrared, NFC, Zigbee or Bluetooth. The mobile phone 5 to be contacted by the DVD player 2 may be known to the DVD player 2 by an initial registration step, wherein the DVD player 2 generates a request to the user to swipe his mobile phone 5 so that the DVD player 2 can establish a more permanent connection with the mobile phone 5. The connection between the DVD player 2 and the mobile phone 5 may also be established via a cable.

In the DVD player 2 specific units are schematically shown. Respective units may be present in the stereo system 4, but are not shown in Figure 1.

The DVD player 2 comprises a communication unit 21 for establishing bi-directional communication connection to the mobile phone 5. Furthermore a security unit 22 for processing license information, a comparison unit 23 for comparing license parameter values with license parameters and a decryption unit 24 for decrypting protected content are shown as parts of the DVD-player 2.

Also within the mobile phone 5, some units are depicted. It will be appreciated that the general structure of a mobile phone and a DVD player are well known, so that only the units, which are relevant for the present invention are shown in Figure 1.

The mobile phone 5 comprises a processing unit 51 for processing requests from the DVD player 2 a storage unit 52 for storing license information relating to digital content, a token 53, in the form of a SIM card, for authentication of a user of digital content and a comparator unit 54 for comparing parameter values with license parameters.

A user may purchase digital content which is protected. The purchase may be done by buying a physical media, such as a DVD, or by connecting the DVD player to the Internet and downloading the digital content. ln either case the digital content will be protected, in order to ensure fair usage thereof. This protection is in general realised by a license, which assigns the right to use of the content to a specific user and/or specific conditions and enforces the fair usage by encryption of the content.

For example some content can be released in a geographic area and is not intended to be used elsewhere. Common examples for this are movies. A movie may be released in the USA six month before it is released in Europe. Sometimes in addition to this geographic requirement a content provider may want to implement a rule, where the user is only allowed to play his purchased content on any device, provided he is present in the proximity of the device at the time of actual rendering.

lf the user provides protected content to the DVD player 2, for example by loading it onto the DVD player 2 or by inserting a DVD, the DVD player will try to render the content, e.g. play-back the movie. In order to be able to render the content the DVD player 2 will require the Rights to render or play the content.

In one embodiment the DVD player 2 obtains the Rights or license to play the content including the parameters determining under which conditions the content can be played. This license can be obtained by purchasing and delivering the license to the DVD player over the internet. The bearer used is not crucial. The license may also be delivered to the DVD player via the physical media, i.e. the DVD.

Alternatively the license may be send to the mobile phone, for example via SMS. The license may remain on the mobile phone or, upon request from the DVD player, may be transferred to the DVD player.

The DVD player recognizes that content shall be played. If no license to render the content is available on the DVD player or a license with special license policies exists on the DVD player or on the medium, i.e. DVD, the DVD will perform prescribed steps.

According to a first alternative of the inventive method, the following steps will be performed. In this example it is assumed, that the license comprises presence parameters as part of the Rights to play the content. These presence parameters will preferably specify the user, who is authorized to use the content.

The DVD player will start to try and discover mobile devices, in particular mobile phones, within its proximity. If a communication with the mobile phone can be established, the DVD player will confirm that the mobile phone is associated to the particular user, who purchased the license for the content to be rendered. This confirmation can be done by the DVD player invoking the mobile phone to obtain a user identity, which is required to allow the content to be rendered. The identity could be represented by a MSISDN, IMSI or a DRM specific identifier for the user. Such information may be available on the mobile phone on the SIM card, which acts as a token. The discovery and connection to the mobile device can be done by using Bluetooth, NFC or similar connection standards.

The mobile phone may have an identification of the DVD stored, so that such a connection will be allowed. It is, however, also possible to request authentication at the DVD player.

If the license parameters prescribe to check the availability of the user identifier during the rendering, the DVD player will repeat at pre-defined intervals the presence of the mobile phone containing the correct SIM, for example by reading the IMSI of the SIM.

lf the license parameters extend to not only check the user identifier but also request additional authentication information such as biometric data (e.g. fingerprint or a PIN/password), the DVD player will interact with an application on the mobile phone or SIM card that handles the interaction with the user to fetch the requested additional information.

If the license further comprises user location parameters as part of the Rights to play the content, the following routines will be followed.

The DVD player will also start to try and discover mobile devices, in particular mobile phones, within its proximity. If a communication with the mobile phone can be established, the DVD player will confirm that the mobile phone is associated to the particular user, who purchased the license for the content to be rendered. This confirmation can be done by the DVD player invoking the mobile phone to obtain a user identity required to allow the content to be rendered.

When the phone is found, the DVD player will invoke the phone to obtain location information. Location information may comprise country, home zone, aluid, cell lD or SIM originating country. This location information can for example be obtained by GPS at the mobile phone. It is, however, also possible, that the location information is obtained by using a RFID-tag to indicate the current location. The information will be transferred to the DVD player and subsequently the rendering device will verify the conditions to allow or not allow rendering of the content.

ln an alternative embodiment of the inventive method the mobile phone performs all the Rights or license verification. The decryption key will only be forwarded to the DVD player, if the correct conditions are fulfilled.

Also in this embodiment the DVD player obtains encrypted content, e.g. downloaded over broadband or on a physical media such as a DVD.

The DVD player will also start to try and discover another device associated with a particular user in its proximity.

The phone either has the necessary license stored already or obtains the license or Rights to play the content including the parameters determining under what conditions the content can be played. This license or those Rights can be purchased and delivered to the mobile phone over Internet regardless of the bearer used or alternatively send to the mobile phone using SMS.

If in this embodiment, where the mobile phone performs the verification, presence parameters are part of the license to play the content, the mobile phone checks the user identity required to allow the content to be rendered.

The present invention provides a combination of a mobile presence / location system with a Digital Rights Management system, wherein the licence can include presence parameters to be fulfilled before a device can render content and possibly continue the user's presence/location monitoring whilst rendering the content.

The parameters used are in particular a geographical location from a broad accuracy range, e.g. per country or to a GPS location, biometric authentication (template verification) of a real person, checking the availability of a hardware token associated with the user whilst rendering the content, e.g. a SIM and/or a person being enforced by the system to reveal some secret only the user knows, e.g. a PIN. With the present invention the DRM can be performed on the rendering device and/or a mobile device such as a mobile phone.

## Claims

1. Method for preventing unauthorized use of digital content, **characterized in that** a rendering device (2, 4) receives protected digital content and initiates a connection for communication to at least one mobile device (5) in the proximity of the rendering device (2, 4) for requesting information from the mobile device (5).

2. Method according to claim 1, **characterized in that** the rendering device (2, 4) requests license information and/or license parameter values from the mobile device (5).

3. Method according to any of claims 1 or 2, **characterized in that** the rendering device (2, 4) requests position information of the mobile device (5) from the mobile device (5), location information of the mobile device (5) from the mobile device (5) and/or authentication information of the user from the mobile device (5).

4. Method according to any of claims 1 to 3, **characterized in that** the rendering device (2, 4) initiates the connection to the mobile device (5) in accordance with license information received at the rendering device (2, 4).

5. Method according to any of claims 1 or 4, **characterized in that** the rendering device (2, 4) compares received license information and/or license parameter values to data available on the rendering device (2, 4).

6. Method according to any of claims 1 to 5, **characterized in that** the protected content is encrypted and the rendering device (2, 4) receives decryption key from the mobile device (5) and decrypts the content for rendering.

7. Method according to any of claims 1 to 6, **characterized in that** the initiation of a connection to the mobile device (5) and requesting of information from the mobile device (5) is performed before and during the rendering of the content.

8. Method according to any of claims 1 to 7, **characterized in that** the mobile device (5) receives a request for license parameter values, in particular position information, from the rendering device (2, 4), obtains the license parameter values, in particular position information, and transfers the obtained values to the rendering device (2, 4).

9. Method according to any of claims 1 to 8, **characterized in that** the mobile device (5) receives a request for license information from the rendering device (2, 4), compares license information stored on the mobile device (5) with the request and transfers the license information to the rendering device (2, 4).

10. Rendering device for rendering digital content, **characterized in that** the rendering device (2, 4) comprises a communication unit (21) for establishing bi-directional communication connection to a mobile device (5).

11. Rendering device according to claim 10, **characterized in that** the rendering device (2, 4) comprises a security unit (22) for processing license information, a comparison unit (23) for comparing license parameter values with license parameters and/or a decryption unit (24) for decrypting protected content.

12. Mobile device for use in combination with a rendering device (2, 4) for rendering protected digital content, **characterized in that** the mobile device (5) comprises a processing unit (51) for processing requests from the rendering device (2, 4).

13. Mobile device according to claim 12, **characterized in that** the mobile device (5) comprises a storage unit (52) for storing license information relating to digital content.

14. Mobile device according to claim 13, **characterized in that** the mobile device (5) comprises a token (53) for authentication of a user of digital content.

15. Mobile device according to any of claims 12 to 14, **characterized in that** the mobile device (5) comprises a comparator unit (54) for comparing parameter values with license parameters.
